# EUROPEAN PATENT SPECIFICATION

(11) **EP 2 097 055 B1**
(45) Date of publication and mention of the grant of the patent: **27.07.2011**
(21) Application number: 07866780.5
(22) Date of filing: 04.12.2007
(51) Int. Cl.: A61H 3/06

(54) **MULTIFUNCTIONAL APPARATUS FOR VISUALLY HANDICAPPED PERSONS**
MULTIFUNKTIONALES GERÄT FÜR PERSONEN MIT BEEINTRÄCHTIGTEM SEHVERMÖGEN
APPAREIL MULTIFONCTIONNEL POUR DES PERSONNES VISUELLEMENT HANDICAPÉES

(30) Priority: 04.12.2006 IT MI20062325
(43) Date of publication of application: 09.09.2009
(73) Proprietor: EASY CARE S.R.L., 50134 Firenze (IT)
(72) Inventor: Quintilio Mario, 07040 Alghero (SS) (IT)
(74) Representative: Cicogna, Franco
(86) International application number: PCT/IT2007/000842
(87) International publication number: WO 2008/068790

(56) References cited:
- EP-A- 1 265 186
- WO-A-03/078929
- WO-A-2004/006064
- WO-A-2006/045819
- GB-A- 2 393 599
- US-A1- 2002 178 063
- US-A1- 2003 179 133
- US-A1- 2005 099 307
- US-A1- 2006 091 223
- US-A1- 2006 129 308

## Description

### BACKGROUND OF THE INVENTION

The present invention relates to a multifunctional apparatus for visually handicapped persons.

At present, no apparatus is available for fully meeting the requirements of a visually handicapped persons, desiring to autonomously move..

On the other hand, several devices have been recently introduced into the market, for allowing visually handicapped persons to use some of the modern technologies.

The above mentioned recent devices include autonomous devices as well as "add-on" devices to be added to conventional palmar arrangements, to allow the latter to be also used by blind persons.

The above mentioned devices essentially comprise keyboards to be attached on the sensible screen of the palmar apparatus, to allow operating keys to be detected by the visually handicapped person, together with the pressure necessary for operating the control elements included in the palmar arrangement.

GPS systems for palmar application are also available.

Furthermore, in recent years the use of personal navigation systems, based on the GPS technology associated with palmar arrangements, both through a physical connection and a Bluetooth connection, has been greatly increased.

This latter technology allows to eliminate cables, thereby providing terminals of a very small size.

Such a system is conventionally constituted by a navigational software, and a map file to be loaded on the palmar apparatus and a GPS antenna including at least four channels for allowing a precise triangulation and defining of the location point of the antenna.

The software comprises a vocal synthesis to provide navigational instructions to the user.

This vocal or voice synthesis is a feature which would be very useful for visually handicapped persons, but which, however, has not been up to now exploited in this field.

US 2003/179133 A1 discloses such a palmar device which comprises a GPS receiver, a Bluethooth Receiver/Transmitter, a blind person device reading/writing and a WIFI Receiver/Transmitter

### SUMMARY OF THE INVENTION

Accordingly, the aim of the present invention as claimed is to provide such a multifunctional apparatus allowing a visually handicapped person to achieve a full and autonomous moving capabilities.

Within the scope of the above mentioned aim, a main object of the invention is to provide such an apparatus allowing a credit/debit card or bancomat (this word being an Italian trade name of a conventional ATM apparatus) to be easily connected to a palmar apparatus, thereby allowing the latter to recognize the user and the loading of data stored on the card as well as an on-line control of the enabled service levels.

Another object of the present invention is to provide such a multifunctional apparatus allowing, owing to the palmar Bluetooth technology, to interface the apparatus with any device enabled for using such a technology and for allowing a visually handicapped user to perform, together with information provided by other systems, in a full autonomous manner, any desired operations such as, for example, operations for taking money at said ATM apparatus, access to automatic ticket releasing machines, as well as for guiding the user through enabled constructions, such as airports and so on.

According to one aspect of the present invention, the above mentioned aim and objects, as well as yet other objects, which will become more apparent hereinafter, are achieved by a multifunctional apparatus for visually handicapped persons, characterized in that said apparatus comprises a credit/debit card or a bancomat card based on a RFID or EVM technology, a palmar arrangement based on an integrated Bluetooth technology, a palmar dedicated device optimized for blind persons, a RFID or EVM (smart chip) card reader, a palmar GPS system, and a managing internet platform.

More specifically, the system comprises:
- A software for receiving data in an unattended mode of reception, through Bluetooth or wifi.
- A locating system for real time locating the PDA in closed environments.
- An informative system for sending data related to a physical position determined by said closed environment locating system,

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

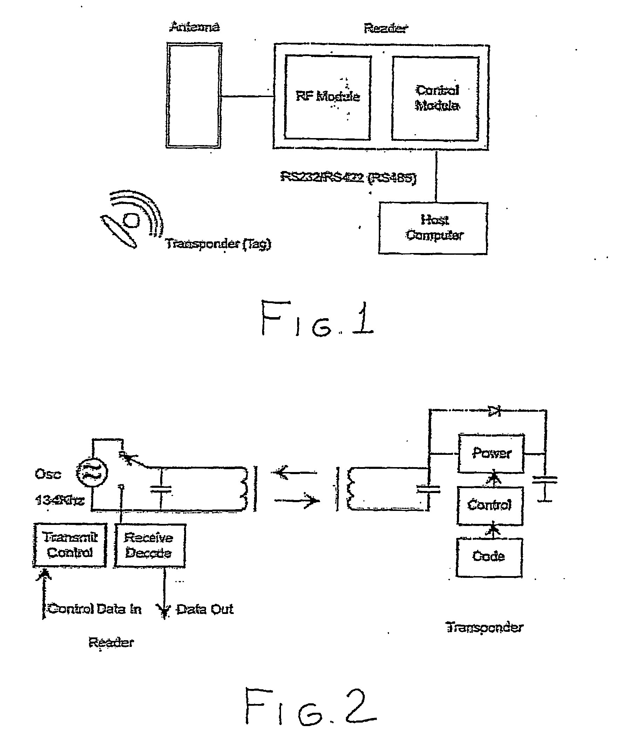

Figure 1 shows a general communication diagram, to be used by a multifunctional apparatus according to the present invention;
Figure 2 shows an operating diagram of the reader-transponder;

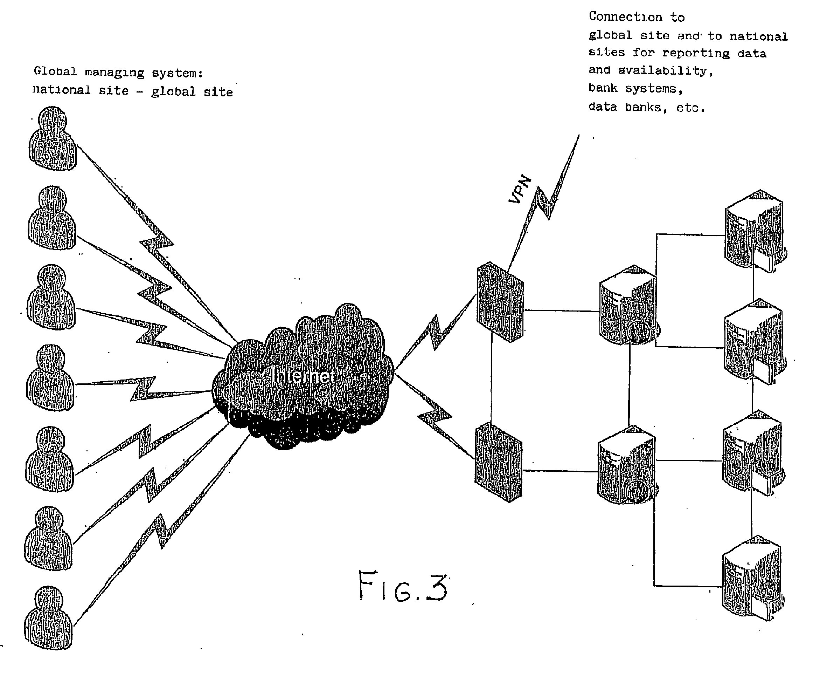

Figure 3 schematically shows an internet managing platform designed for use in the multifunctional apparatus according to the present invention;

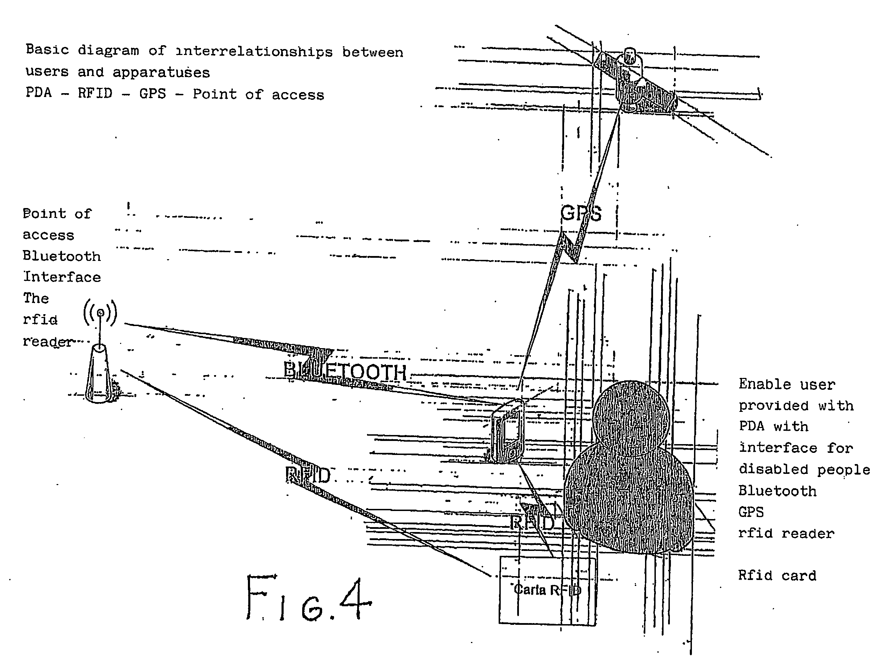

Figure 4 shows a basic diagram of possible interrelationships between users and apparatuses according to the present invention;

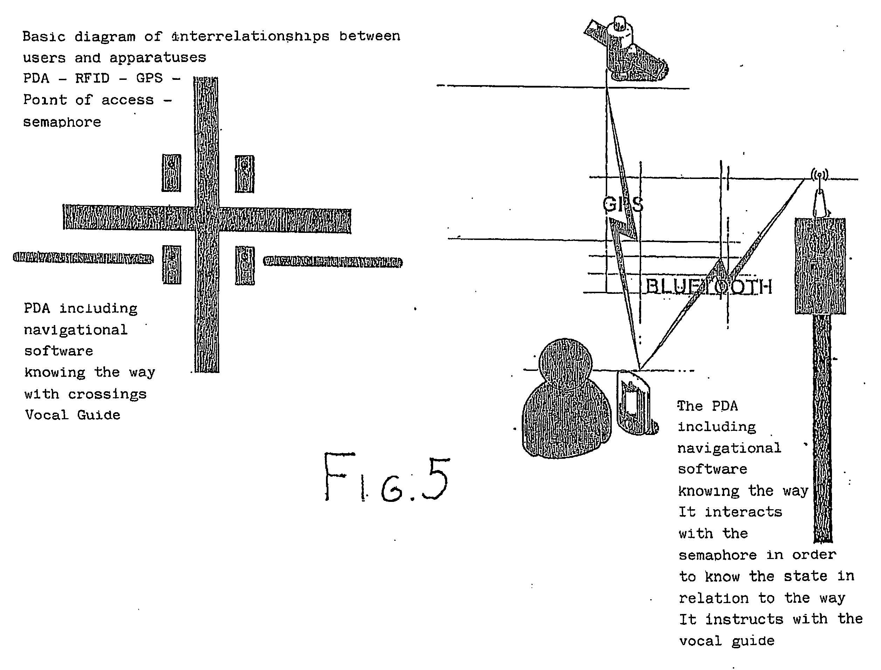

Figure 5 is a schematic view, similar to figure 4, showing an example of an interrelationship with a semaphore;

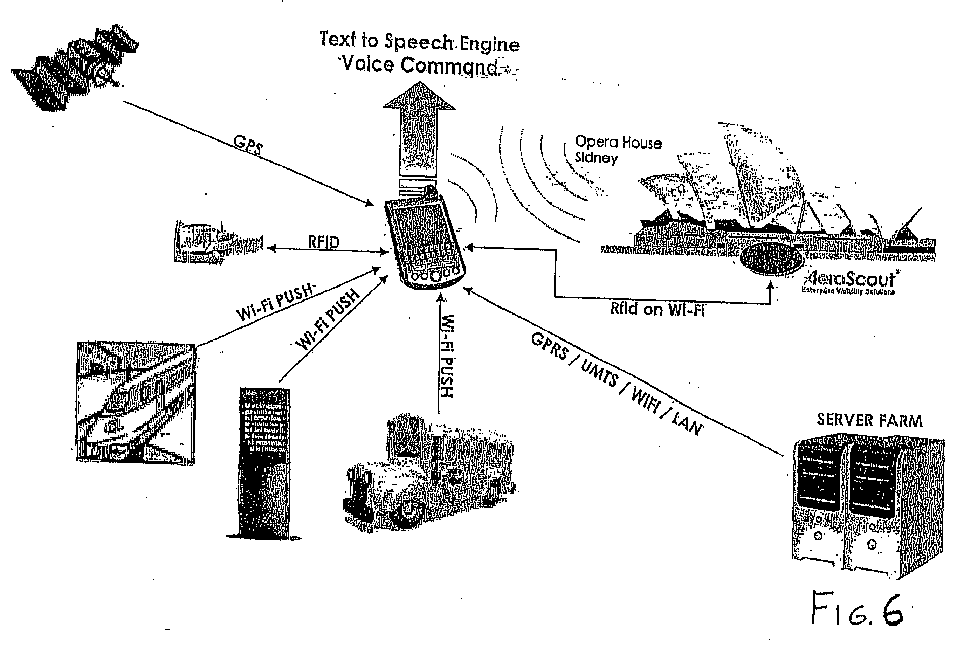

Figure 6 shows a schematic diagram of a practical embodiment of the system based on the multifunctional apparatus according to the present invention;

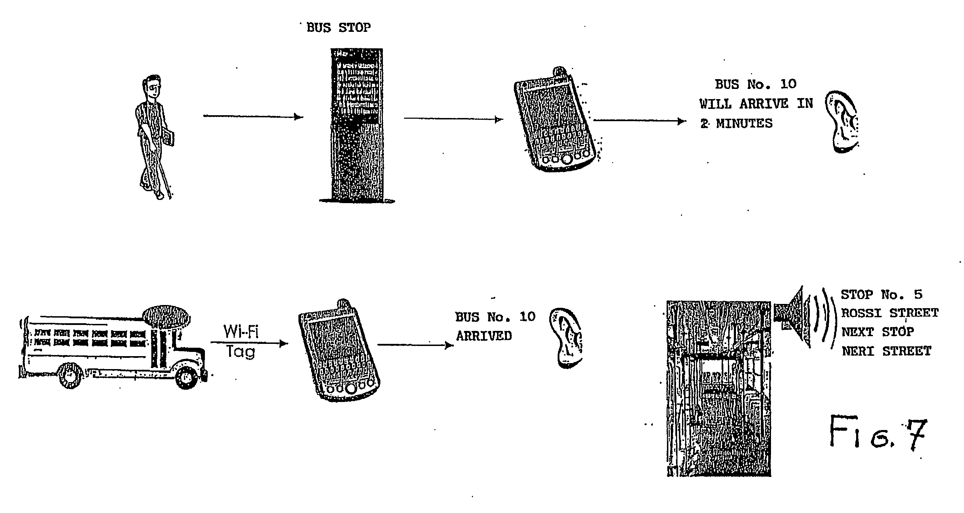

Figure 7 shows an operation diagram of the subject apparatus in a case in which it is integrated with a public transport network;

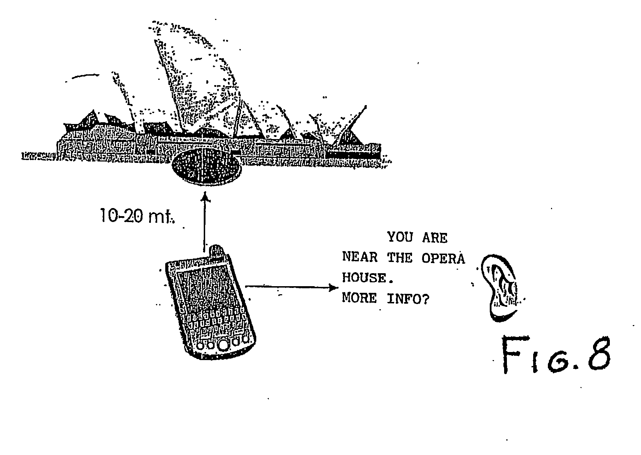

Figure 8 shows a schematic operating diagram of the subject apparatus near buildings of interest for the user;

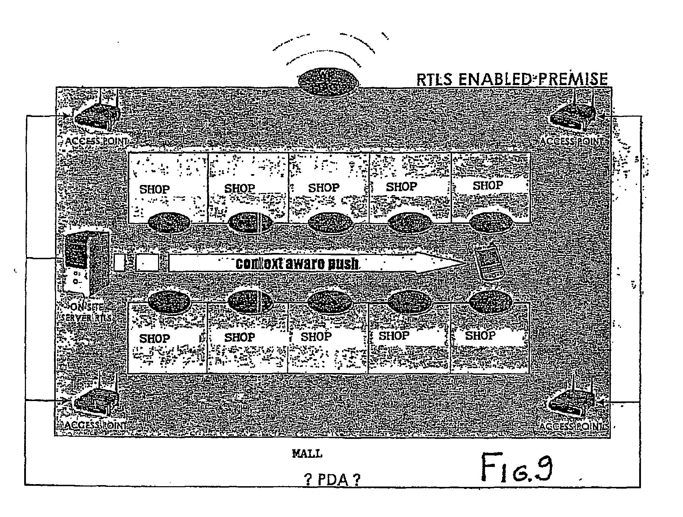

Figure 9 shows a schematic operation diagram of the subject apparatus in shopping centers and other environments such as a museum, a post office and the like; and

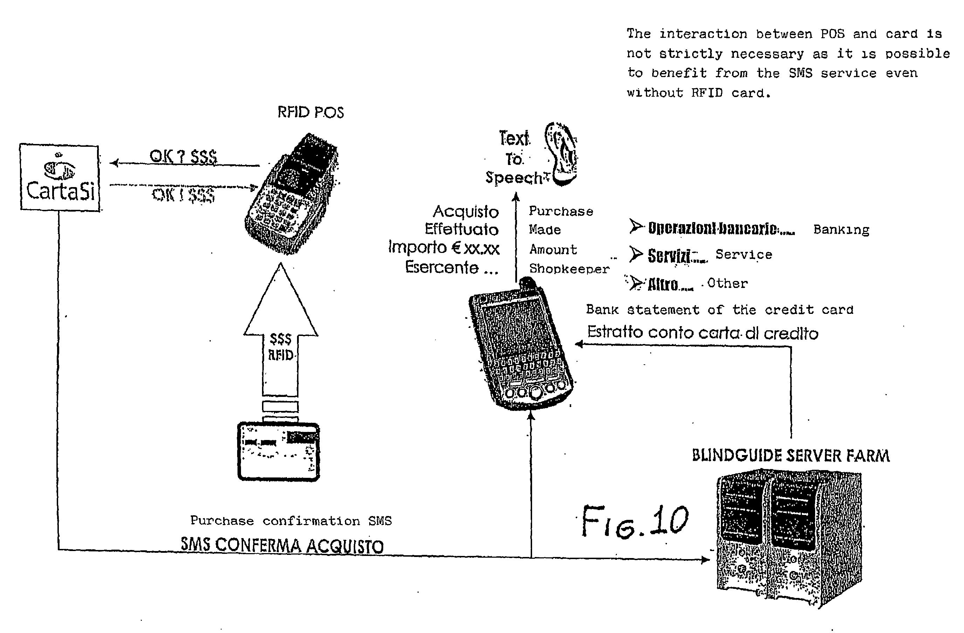

Figure 10 shows a schematic operation diagram of the subject apparatus, for providing a good buying and paying services.

### DESCRIPTION OF THE PREFERRED EMBODIMENTS

The multifunctional apparatus for visually handicapped persons according to the present invention comprises a credit/debit or bancomat card, based on a RFID, EVM technology, or the like, a palmar apparatus based on an integrated Bluetooth technology, a palmar device optimized for blind persons, a RFID card reader, a palmar GPS system, and an internet managing platform.

The RFID technology credit card is a conventional credit card which, inside its support medium, contains a chip and related RF identifying antenna.

These devices, which are made by several makers, are so designed as to meet the requirements of the ISO 15693 standard, comprise an unique identifier element, and a memory having a storing capability of substantially 2k bit.

The RFID or EVM card reader is designed for reading respective RFID or EVM tags.

In this connection it should be pointed out that, if EVM cards are herein used, then the latter will not use a radio frequency, but electric contacts for accessing the chip and a larger memory.

Several types of reading devices or readers are easily commercially available.

In particular, it is preferred to use a reader adapted to be interfaced with the palmar apparatus through a CF or SD card port.

Several makers provide such an antenna type assembly which include a lot of antenna models depending on the tag type to be read-out and depending on the reading distance.

The reading device or reader transmits a codified radiosignal, which is detected by the tag, which responds by sending a codified radiosignal containing the stored data.

Since the tag is not power supplied, in order to transmit such an active communication, the antenna will transmit a magnetic pulse of a duration of 50 ms, and at a frequency of 134.2 KHz, for energizing the tag for storing the required energy or power in a small inner capacitor; this power or energy will be then used to transmit data and then it will be discharged.

The integrated Bluetooth technology palmar device can comprise a conventional last generation palmar device including the most-common interfaces such as those designed for CF and/or SD cards, direct voice communications, Bluetooth communications, mobile Windows operative system or any other operating system suitable to support PDA applications and satellite navigational software, RFID or EVM card managing software, and payment system interface specific software.

The optimized palmar device for blind persons can be of a type susceptible to be easily found on the market, for example of a type operating as an "add-on" feature to conventional palmar apparatus, thereby allowing the latter to be used also by blind persons.

The above mentioned devices conventionally comprise operating keyboards to be arranged and locked on the palmar sensitive screen, to allow the keys to be easily detected by the blind person, while providing a related control pressure as necessary for driving the palmar apparatus keys.

The palmar GPS system is a personal navigational system based on the GPS technology, together with the palmar apparatus, both through a physical connection and through a Bluetooth link.

The last mentioned technology allows to eliminate cables thereby providing terminal devices of a very small size.

The system would comprise a navigational software, a map file including a plurality of maps to be loaded on the palmar apparatus, and a GPS antenna including at least four channels to provide triangulation and a precise definition of the location of the antenna.

The software comprises vocal synthesis means, to provide instructions related to the navigation to the user.

This function is a basic one for the intended specific use or application.

The precision of the system is much smaller than 1 meter, owing to a recent removal of errors affecting the signal and due to a use of position or location correcting signals.

The apparatus comprises moreover an intermanaging platform.

The core of the managing system comprises a platform of modular construction, for allowing the users to log-in themselves in the system or service, to achieve a credit/debit or bancomat RFID or EVM card, and to easily access the required services.

The system is designed as a modular one including a plurality of operating modules allowing to provide a safe redundancy, to allow the required service or application to be properly continued under any operating condition.

It is possible to use a "master" site having a construction or structure similar to that shown in the figures, thereby providing redundancy functions (such as firewall, webserver, database server, backup system functions).

On a side of this construction, further modules are plugged-in, which, on cryptographic channels (vpn or the like channels) will provide communication with bank systems, airport or station systems, to allow the user and his/her characteristics to be easily identified.

In this connection it should be pointed out that the safety and availability of the system is based on the basic internet concept, i.e. a series of twin sites, which are all mutually replicated and located at different locations of the world, and, as one thereof is lacking, then will take the function of the lacking site.

Such a set-out will allow to provide a localized site arrangement for each Country, with all the consequent advantage related to such a localization (languages, customs and so on) and related to an international "master site" arrangement.

If one of the latter is lacking, then the palmar apparatus software or the enabled building software will automatically search one of the other sites to provide a target service continuity.

Thus, a network system is herein provided adapted to automatically balance the operating loads and temporary unavailability of some resources or facilities, while providing a continuously operating system and re-aligning data as the target facilities will be available again.

It has been found that the invention fully achieves the intended aim and objects..

In fact, an apparatus has been herein provided, including components which can be easily found on the market, all said components being standardized and made by several makers, while having a comparatively low cost.

The invention, as disclosed, comprises the above mentioned components for making an unique product allowing a visually handicapped user to fully autonomously operate, owing to the navigational system and dedicated keyboard allowing to use a conventional palmar apparatus including a standard software and a global managing platform.

The system allows to provide a quick and easy linking of the credit/debit card, or ATM (bancomat) card, made according to a RFID or EVM technology, to the palmar apparatus, allowing the latter to easily detect the user and loaded data as stored in the card and to easily control, on line, the enabled service levels.

The system further allows, through the palmar apparatus Bluetooth or wifi technology, to interface with any other devices enabled to support such a technology, and together with information given by other systems, to enable the handicapped bearer to perform in an autonomous manner any desired operations, such as withdrawing of money at ATM or bancomat points, an automatic picket arrangement access, to pilot the user in enabled structures, such as airports.

An exemplary embodiment of a guiding system for visually handicapped persons according to the present invention will be hereinbelow disclosed, as related to an apparatus allowing to:
1) provide a guiding tool for visually handicapped or blind persons through a town, adapted to integrate a "pedestrian" navigation with a proper use of public transport means;
2) allow the instrument to properly receive information in an unattended mode of operation, together with a related information, to the blind or visually handicapped person;
3) associate the tool or instrument with a series of services for facilitating payments by a blind person, in particular an integration with a credit/debit card or RFID or EVM bancomat or ATM systems, and further payments through SMS systems by payment mechanisms and technologies specifically designed for banks providing the above services.

Thus, the apparatus according to the present invention allows a visually handicapped or blind person to take an autonomous advantage of services and goods, without accompanying persons, thereby improving the visually handicapped person life quality, to assure the handicapped person the same capabilities of a non visually handicapped person.

According to a preferred embodiment of the invention, the apparatus comprises a specifically designed tool or instrument, which has been called "PDA for Blind people" (B-PDA), having a very simple user interface which can be easily operated by a blind person.

To that end, the subject apparatus comprises a very reduced number of actuating or operating pushbuttons, with a highly developed TEXT-TO-SPEECH interface (for reproducing a written text to a voiced text) and the SPEECH-COMMANDS interface (to send voiced commands to the computer).

The hardware apparatus is a very reliable one, with batteries of a long duration and including at least the following hardware and software technologies.

### HARDWARE

- Cellular telephony Receiver/Transmitter with a SMS support (at present GSM/UMTS, in the future WiMax).
   In addition to the above function, it is also provided a proper verification or test function to verify a proper billing through the SMS system, the exercising code holding the charged amount therein, as well as other general information.
- Receiver/Transmitter for data links on cellular telephony (at present GPRS Edge, in the future WiMax or other protocol or technology suitable for transferring data on mobile telephonic systems).

- An AGPS receiver.
- A GPS receiver.
- A RFID Reading/Writing unit.
- A EVM Card (SmartChip) Reading/Writing unit.
- A Bluetooth Receiver/Transmitter of Class 1, operating at 732Kbps.
- A WiFi Receiver/Transmitter compatible with the so-called Real Time Locational Services (RTLS) technologies..
- A basic Hardware.

### SOFTWARE

- A software for authenticating and authorizing a use of the B-PDA device, with an integration of the RFID credit card.
- A software for integrating interfaces and task managers of programs, to be carried upon receiving voice commands.
- A software for managing updatings.
- An engine software for recognizing or detecting voice commands and phrase pronunciation.
- An AGPS/GPS Navigation Software with a proper managing of points of interest.
- A software for integrating in the AGPS/GPS system data related to public transport means.
- A managing software for managing SMS's with an integration of the related payment system.
- A managing software for managing the data network access arrangement.
- A receiving software for properly receiving data from the RTLS location system.
- A receiving and locating software for receiving and locating WIFI-RFID and/or Bluetooth sources of Class 1.

- An interacting software for interacting with the data bank as the B-PDA is connected in the home.
- A managing software for managing the telephonic number list and related cellular telephony calls.
- A managing software for managing the database.
- A base operating system.

The apparatus according to this embodiment further comprises a locating system for locating the B-PDA inside a closed construction equipped to this end.

This technology is based on wireless apparatuses designed for triangulating the position of the PDA and providing the latter, in a real time, with information related to its physical location or position.

In addition to the above, the RTLS system allows a user to take advantage of an inner guide through the rooms, to locate specific interesting points, such as public toilets, information points, specific service and good points.

An important part of this embodiment is constituted by the RTLS Server.

A RTLS server operates to locate the PDA's in closed environments, and triangulate the position through an Access Point 802.11 network, and compatible with the RTLS technology.

In this connection it should be pointed out that the server sending information based on the physical location or position of the PDA, which can be defined as a "Location Based Push Server" (and which hereinbelow will be called L.B.P. server) will capture from the RTLS server the position of the PDA.

This server will contain an information base data which can be easily updated, and which are related to the different physical positions or locations in the managed environment. By the coordinates provided by the RTLS server, the L.B.P. server will provide the PDA with information to be processed through the text-to-speech engine, which will then send said information to the user by voice.

The L.B.P. server, moreover, will respond to request transmitted by the PDA on the specific information, such as routers or ways to toilets, information services, and so on.

This function can be met owing to the fact that the L.B.P. server will hold therein the routes to said services from all the positions in the building.

The apparatus comprises moreover a server technologic platform, the so-called B-FARM, managing all the overall B-GUIDE system.

The B-FARM platform comprises several essential components, to be divided into blocks, to divide the payload, thereby increasing the reliability and scalability of the designed construction.

The B-FARM contains server, storage, backup and network systems for connection to the internet, sending and receiving SMS's, for exchanging information with the bank system.

All the system is made by redundant and fault-tolerant technologies. Each software resides in one or more servers.

Some software components of the B-FARM, or of the server, are as follows.
- An access managing system, for managing the applicative framework constituting the overall system is the core of the system.
- A system allowing an interactivity of all the platform users.
- A system supervising the exchange of information with the bank systems.
- A system for managing the TAG WIFI RFID or EVM and a system for managing the push locations of the information through WIFI or Bluetooth.
- A system containing images of the updatings of the B-PDA's and allowing them to be unloaded from a remote location.
- A system allowing a collection of the information related to the B-PDA's to store in a safe and reliable manner the personalized information of each user to be reinstalled in a case of a malfunction of the B-PDA.
- A system managing interface.
- A database engine of the overall system.
- A managing engine for managing the system user access.
- A managing engine for managing RTLS data of the enabled building.

Though the above list is a non exhaustive one, the disclosed components will be sufficient to achieve the intended objects.

In practicing the invention, the used materials, as well as the contingent size, can be any, depending on requirements and the status of the art.

## Claims

1. A multifunction apparatus for a visually handicapped person comprising a palmar device including a RFID or EVM credit card device, an integrated Bluetooth device, a blind person device reading/writing, a RFID or EVM card reading/writing device, a GPS system device, and an internet managing platform device, thereby said apparatus provides a self-guide tool to allow said person to self-guide through a populated zone to search desired information, perform payments, reproduce any written texts to voice and send voiced commands to a computer, said apparatus comprising hardware means including:
a first Receiver/Transmitter for cellular telephonic systems, with a SMS support;
a second Receiver/Transmitter for cellular phone data links;
an AGPS receiver;
a GPS receiver;
a RFID Reading/Writing unit and at least said EVM card;
a Bluetooth Receiver/Transmitter;
a WiFi Receiver/Transmitter compatible with a RTLS technology; and
a RTLS localizing and triangulating server, said apparatus also comprising software means for providing authenticating and authorizing functions, integrating interfaces and task managers, managing updating events, recognizing voice commands, controlling navigation requirements, integrating data related to public transport means, managing SMS's and network access data, receiving data from a RTLS location system, receiving and locating WIFI-RFID and/or Bluetooth sources, interacting with data banks, managing telephonic directories and related cellular phone calls, and managing databases of a base operating system.

2. An apparatus, according to claim 1, **characterized in that** said apparatus further comprises a server platform comprising a plurality of separated component blocks.

3. An apparatus, according to claim 2, **characterized in that** said server platform comprises a composite operating system for managing access events, allowing an interactivity of all the platform users, supervising an exchange of information with bank systems, managing the TAG WIFI RFID or EVM and the push locations of the information through WIFI or Bluetooth, providing updated images and unloading them from a remote location, storing personalized information, managing interfaces, user accesses, and RTLS data.

4. An apparatus, according to claim 3, **characterized in that** said composite operating system comprises further software means for receiving data through said Bluetooth or wifi, providing real time locating in closed environments, and sending related location information.

5. An apparatus, according to claim 1, **characterized in that** said credit card device comprises a credit card chip and a RF identifying antenna, meeting the ISO 15693 standard.

6. An apparatus, according to claim 1, **characterized in that** said reading/writing device is interfaced with said palmar apparatus through a CF or SD card port.

7. An apparatus, according to claim 1, **characterized in that** said antenna transmits a magnetic pulse of a duration of 50 ms and a frequency of 134.2 KHz.

8. An apparatus, according to claim 1, **characterized in that** said integrated Bluetooth device comprises common interfaces, such as a CF card and/or SD card, voiced, Bluetooth, mobile windows operating systems and satellite navigation software systems, managing software for managing said RFID cards and a dedicated software interfacing with payment systems.

9. An apparatus, according to claim 8, **characterized in that** said palmar device comprises a keyboard to be coupled to a palmar sensitive or responsive screen to allow keyboard keys to be detected by a blind person.

10. An apparatus, according to claim 1, **characterized in that** said GPS device comprises a navigation software, a map file to be loaded on said palmar device, and a GPS antenna including at least four channels to provide a precise triangulation and definition of a location thereat said antenna is located.

11. An apparatus, according to claim 10, **characterized in that** GPS device comprises software means for controlling a voice synthesis arrangement to provide navigation related instructions to said person.

12. An apparatus, according to claim 1, **characterized in that** said apparatus comprises moreover an internet managing platform including a modular platform construction to allow said person to self log-in to a desired service, to obtain a said RFID or EVM credit card or to access any offered services.

13. An apparatus, according to claim 1, **characterized in that** said apparatus further comprises a master site for making all the apparatus functions redundant.

14. An apparatus, according to claim 12, **characterized in that** said master site comprises a plurality of plugged-in modules which, through cryptographic channels, communicate with bank, airport and station systems, to allow said person to be identified.

## Patentansprüche

1. Multifunktionales Gerät für eine Person mit beeinträchtigtem Sehvermögen, umfassend: eine Handflächenvorrichtung einschließlich einer RFID- oder EVM-Kreditkartenvorrichtung, eine integrierte Bluetooth-Vorrichtung, eine Lese/Schreibvorrichtung für eine blinde Person, eine Lese/Schreibvorrichtung für RFID- oder EVM-Karten, eine GPS-Systemvorrichtung und eine Internethandhabungsplattform-Vorrichtung, wodurch das Gerät ein Selbstführungswerkzeug bereitstellt, um es der Person zu ermöglichen, sich selbst durch eine bevölkerten Bereich hindurch zu führen, um nach gewünschten Informationen zu suchen, Zahlungen zu leisten, irgendeinen geschriebenen Text in Sprache wiederzugeben und gesprochene Anweisungen an einen Computer zu senden, wobei das Gerät Hardware-Mittel umfasst, die einschließen:
einen ersten Empfänger/Sender für Mobilfunksysteme mit einer SMS-Unterstützung;
einen zweiten Empfänger/Sender für Mobilfunk-Datenverbindungen;
einen A-GPS-Empfänger;
einen GPS-Empfänger;
eine RFID-Lese/Schreibeinheit und mindestens die EVM-Karte;
einen Bluetooth-Empfänger/Sender;
einen WiFi-Empfänger/Sender, der mit einer RTLS-Technik kompatibel ist; und
einen RTLS-Server zur Lokalisierung und Triangulation, wobei das Gerät auch Softwaremittel umfasst zum Bereitstellen von Beglaubigungs- und Bevollmächtigungsfunktionen, integrierenden Schnittstellen und Taskmanagern, zum Verarbeiten aktualisierender Ereignisse, zum Erkennen von Sprachanweisungen, zum Steuern von Navigationsanforderungen, zum Einbeziehen von Daten, die sich auf die öffentlichen Verkehrsmittel beziehen, zum Verwalten von SMS und Netzzugangsdaten, zum Empfangen von Daten aus einem RTLS-Ortungssystem, zum Empfangen und Orten von WFI-RFID- und/oder Bluetooth-Quellen, zum Zusammenwirken mit Datenbanken, zum Verwalten von Telefonverzeichnissen und damit zusammenhängenden Mobilfunkanrufen und zum Verwalten von Datenbasen eines Basisbedienungssystems.

2. Gerät nach Anspruch 1, **dadurch gekennzeichnet, dass** das Gerät ferner eine Serverplattform umfasst, die mehrere getrennte Komponentenblöcke umfasst.

3. Gerät nach Anspruch 2, **dadurch gekennzeichnet, dass** die Serverplattform ein Verbundbedienungssystem für das Verwalten von Zugriffsereignissen umfasst, das eine Interaktivität aller Plattformbenutzer ermöglicht, den TAG WIFI-RFID oder EVM und die Positionsverschiebung der Informationen durch WIFI oder Bluetooth verwaltet, aktualisierte Bilder bereitstellt und sie aus einem entfernt liegenden Standort entnimmt, personalisierte Informationen speichert, Schnittstellen, Benutzerzugriffe und RTLS-Daten verwaltet.

4. Gerät nach Anspruch 3, **dadurch gekennzeichnet, dass** das Verbundbedienungssystem ferner Softwaremittel für den Empfang von Daten durch das Bluetooth oder WIFI, das Gewährleisten der Ortung in geschlossenen Umgebungen in Echtzeit und das Senden der betreffenden Ortungsinformationen umfasst.

5. Gerät nach Anspruch 1, **dadurch gekennzeichnet, dass** die Kreditkartenvorrichtung ferner einen Kreditkartenchip und eine HF-Identifizierungsantenne umfasst, die den Standard ISO 15693 erfüllt.

6. Gerät nach Anspruch 1, **dadurch gekennzeichnet, dass** die Lese/Schreibvorrichtung durch einen CF- oder SD-Kartenport mit dem Handflächengerät gekoppelt ist.

7. Gerät nach Anspruch 1, **dadurch gekennzeichnet, dass** die Antenne einen magnetischen Puls einer Dauer von 50 ms und einer Frequenz von 134,2 kHz sendet.

8. Gerät nach Anspruch 1, **dadurch gekennzeichnet, dass** die integrierte Bluetooth-Vorrichtung die gebräuchlichen Schnittstellen umfasst, wie z.B. eine CF-Karte und/oder SD-Karte, stimmbehaftet, Bluetooth, mobile Windows-Betriebssysteme und Satellitennavigations-Softwaresysteme, Verwaltungssoftware zum Verwalten der RFID-Karten und eine zugeordnete Software, die an Zahlungssysteme ankoppelt.

9. Gerät nach Anspruch 8, **dadurch gekennzeichnet, dass** die Handflächenvorrichtung eine Tastatur umfasst, die an einen handflächenempfindlichen oder reaktionsfähigen Bildschirm gekoppelt ist, um zu ermöglichen, dass die Tastaturtasten durch einen Blinden erfasst werden.

10. Gerät nach Anspruch 1, **dadurch gekennzeichnet, dass** die GPS-Vorrichtung umfasst: eine Navigationssoftware, eine Kartendatei, die auf die Handflächenvorrichtung zu laden ist, und eine GPS-Antenne, die mindestens vier Kanäle aufweist, um eine genaue Triangulation und Bestimmung eines Ortes zu liefern, an dem sich die Antenne befindet.

11. Gerät nach Anspruch 10, **dadurch gekennzeichnet, dass** die GPS-Vorrichtung Softwaremittel zum Steuern einer Sprachsyntheseeinrichtung umfasst, um der Person navigationsbezogene Anweisungen zu liefern.

12. Gerät nach Anspruch 1, **dadurch gekennzeichnet, dass** das Gerät außerdem eine Internethandhabungsplattform einschließlich einer modularen Plattformkonstruktion umfasst, um es der Person zu ermöglichen, sich selbst in die gewünschte Dienstleistung einzuloggen, um die RFID- oder EVM-Kreditkarte zu erhalten oder auf beliebige angebotene Dienstleitungen zuzugreifen.

13. Gerät nach Anspruch 1, **dadurch gekennzeichnet, dass** das Gerät ferner einen Master-Standort umfasst, um all die Gerätefunktionen überflüssig zu machen.

14. Gerät nach Anspruch 12, **dadurch gekennzeichnet, dass** der Master-Standort mehrere Steckmodule umfasst, welche über verschlüsselte Kanäle mit Bank-, Flughafen- und Bahnhofseinrichtungen kommunizieren, um die Identifizierung der Person zu ermöglichen.

## Revendications

1. Appareil multifonctionnel pour une personne visuellement handicapée comprenant un dispositif palmaire incluant un dispositif pour carte de crédit RFID ou EVM, un dispositif Bluetooth intégré, un dispositif de lecture/écriture pour une personne aveugle, un dispositif de lecture/écriture pour carte RFID ou EVM, un dispositif pour système GPS, et un dispositif de plateforme de gestion Internet, grâce auxquels ledit appareil fournit un outil d'autoguidage pour permettre à ladite personne de s'autoguider à travers une zone peuplée pour rechercher des informations souhaitées, effectuer des paiements, reproduire tout texte écrit en vocal et envoyer des instructions vocales à un ordinateur, ledit appareil comprenant des moyens matériels incluant :
- un premier émetteur/récepteur pour des systèmes téléphoniques cellulaires, avec un support SMS ;
- un second émetteur/récepteur pour des liaisons de données de téléphone cellulaire ;
- un récepteur AGPS ;
- un récepteur GPS ;
- une unité de lecture/écriture RFID et au moins ladite carte EVM ;
- un émetteur/récepteur Bluetooth ;
- un émetteur/récepteur Wifi compatible avec une technologie RTLS ; et
- un serveur de triangulation et de localisation RTLS,
ledit appareil comprenant également des moyens logiciels pour fournir des fonctions d'authentification et d'autorisation, intégrer des interfaces et des gestionnaires de tâches, gérer des événements de mise à jour, reconnaitre des instructions vocales, contrôler des exigences de navigation, intégrer des données liées à des moyens de transport public, gérer des données de SMS et d'accès à un réseau, recevoir des données d'un système de localisation RTLS, recevoir et localiser des sources WIFI-RFID et/ou Bluetooth, interagir avec des banques de données, gérer des répertoires téléphoniques et des appels téléphoniques cellulaires liés, et gérer des bases de données d'un système d'exploitation de base.

2. Appareil selon la revendication 1, **caractérisé en ce que** ledit appareil comprend en outre une plateforme de serveur comprenant une pluralité de blocs de composants séparés.

3. Appareil selon la revendication 2, **caractérisé en ce que** ladite plateforme de serveur comprend un système d'exploitation composite destiné à gérer les événements d'accès, permettre une interactivité de tous les utilisateurs de la plateforme, superviser un échange d'informations avec des systèmes bancaires, gérer les TAG WIFI RFID ou EVM et les emplacements du pousser des informations grâce à la WIFI ou au Bluetooth, fournir des images mises à jour et les télécharger à partir d'un emplacement distant, stocker des informations personnalisées, gérer des interfaces, des accès utilisateur et des données RTLS.

4. Appareil selon la revendication 3, **caractérisé en ce que** ledit système d'exploitation composite comprend d'autres moyens logiciels permettant de recevoir des données grâce au dit Bluetooth ou à la wifi, fournir une localisation en temps réel dans des environnements clos, et envoyer des informations liées à la localisation.

5. Appareil selon la revendication 1, **caractérisé en ce que** ledit dispositif pour carte de crédit comprend une puce pour carte de crédit et une antenne d'identification RF, conforme à la norme ISO 15693.

6. Appareil selon la revendication 1, **caractérisé en ce que** ledit dispositif de lecture/écriture est en interface avec ledit appareil palmaire grâce à une porte pour carte CF ou SD.

7. Appareil selon la revendication 1, **caractérisé en ce que** ladite antenne transmet une impulsion magnétique d'une durée de 50 ms et une fréquence de 134,2 KHz.

8. Appareil selon la revendication 1, **caractérisé en ce que** ledit dispositif Bluetooth intégré comprend des interfaces communes, telles qu'une carte CF et/ou une carte SD, des systèmes vocaux, Bluetooth, un système d'exploitation Windows Mobile, et des systèmes logiciels de navigation satellite, un logiciel de gestion destiné à gérer lesdites cartes RFID et un logiciel dédié assurant l'interface avec les systèmes de paiement.

9. Appareil selon la revendication 8, **caractérisé en ce que** ledit dispositif palmaire comprend un clavier destiné à être couplé à un écran palmaire sensible ou réactif pour permettre que les touches du clavier soient détectées par une personne aveugle.

10. Appareil selon la revendication 1, **caractérisé en ce que** ledit appareil GPS comprend un logiciel de navigation, un fichier de carte à charger sur ledit dispositif palmaire, et une antenne GPS incluant au moins quatre canaux pour fournir une triangulation précise et la définition d'un lieu où ladite antenne est située.

11. Appareil selon la revendication 10, **caractérisé en ce que** l'appareil GPS comprend des moyens logiciels destinés à contrôler un agencement de synthèse vocale pour fournir à ladite personne des instructions liées à la navigation.

12. Appareil selon la revendication 1, **caractérisé en ce que** ledit appareil comprend de plus une plateforme de gestion d'Internet incluant une construction de plateforme modulaire pour permettre que ladite personne se connecte elle-même à un service souhaité, afin d'obtenir une dite carte de crédit RFID ou EVM, ou d'avoir accès à des services proposés quelconques.

13. Appareil selon la revendication 1, **caractérisé en ce que** ledit appareil comprend en outre un site maitre pour rendre toutes les fonctions de l'appareil redondantes.

14. Appareil selon la revendication 12, **caractérisé en ce que** ledit site maitre comprend une pluralité de modules enfichés qui, grâce à des canaux de chiffrement, communiquent avec le système d'une banque, d'un aéroport et d'une gare pour permettre que ladite personne soit identifiée.
